# EUROPÄISCHE PATENTANMELDUNG

(11) **EP 1 260 613 A2**
(43) Veröffentlichungstag der Anmeldung: **27.11.2002**
(21) Anmeldenummer: 02008052.9
(22) Anmeldetag: 11.04.2002
(51) Int. Cl.: C23G 5/02, B08B 3/04

(54) **Verfahren zum Entölen von Schrotten aus Aluminium-Werkstoffen**

(30) Priorität: 28.04.2001 DE 10120984
(71) Anmelder: VAW aluminium AG, 53117 Bonn (DE)
(72) Erfinder: Güssgen, Olaf, 41542 Dormagen (DE)
(74) Vertreter: Cohausz & Florack

(57) **Zusammenfassung**

Die Erfindung betrifft ein Verfahren zum Entölen von Schrotten (1) aus Aluminium-Werkstoffen, bei welchem auf der Oberfläche der Schrotte anhaftende Ölrückstände über ein wässriges Entölungsmittel (5) abgespült werden. Ein derartiges Verfahren wird erfindungsgemäß im Hinblick auf den Energieeinsatz und die zur Entölung benötigte Zeitdauer dadurch verbessert, daß dem Entölungsmittel Tenside oder organische Lösungsmittel zugesetzt werden.

## Beschreibung

Die Erfindung betrifft ein Verfahren zum Entölen von Schrotten aus Aluminium-Werkstoffen, bei welchem auf der Oberfläche der Schrotte anhaftende Ölrückstände über ein wässriges Entölungsmittel abgespült werden.

Schrotte aus Aluminium-Werkstoffen mit ölbehafteten Oberflächen fallen beispielsweise bei der Herstellung von Aluminium-Bauteilen zur Herstellung von Kraftfahrzeugen als Abfälle bei Stanz- und Tiefziehprozessen an. Teilweise fallen Schrotte aus Aluminium-Werkstoffen auch als Ausschußware bei der Herstellung von Aluminium-Bauteilen für die Kraftfahrzeugindustrie an. Die Ölbelegung an der Oberfläche der Schrotte resultiert dabei teilweise aus der bereits auf den Aluminium-Halbzeugen vorhandenen Walzölbelegung vorwiegend jedoch aus einer für den Weiterverarbeitungsprozeß notwendigen Ölbelegung etwa durch Tiefziehöle.

Die erneute Zuführung von Schrotten aus Aluminium-Werkstoffen in die Fertigungskette von Aluminium-Halbzeugen ist interessant, da einerseits diese Schrotte in der Regel sortenrein und legierungsspezifisch vorliegen und andererseits die Wiederverwertung von Aluminium-Schrotten aus energetischen und wirtschaftlichen Gründen sinnvoll ist.

Für die Wiederverwertung von ölbelegten Schrotten aus Aluminium-Werkstoffen ist es notwendig, die Oberfläche der Schrotte soweit als möglich von der Ölbelegung und Feuchtigkeitsbelegung zu befreien. Andernfalls führt eine verbleibende Ölbelegung bei der Wiederzuführung der Schrotte in den Schmelzprozeß zu Verunreinigungen der Schmelze und Beeinträchtigungen beim Schmelz- und Gießvorgang.

Es ist aus dem Stand der Technik bekannt, die Ölbelegung von Schrotten aus Aluminium-Werkstoffen durch eine Heißdampf/-Wasserbehandlung zu reduzieren bzw. zu entfernen. Hierzu werden die ölbelegten Schrotte in einem Entölungsofen über mehrere Stunden einer Berieselung durch Heißwasser bzw. Heißdampf ausgesetzt. Im Ergebnis führt diese Behandlung zu einer Entölung der Schrotte aus Aluminium-Werkstoffen auf einem Niveau, welches die erneute Zuführung dieser Schrotte in den Schmelzprozeß ermöglicht.

Bei dem bekannten Verfahren ist problematisch, daß der Energie- und Zeiteinsatz zur Entölung sehr hoch ist, was dazu führt, daß die Entölungskosten vergleichsweise hoch sind, was wiederum die Wiederverwertung von ölbelegten Aluminium-Schrotten aus energetischen und ökonomischen Gründen weniger interessant macht.

Ausgehend von dem zuvor beschriebenen Stand er Technik liegt der vorliegenden Erfindung die Aufgabe zugrunde, ein Verfahren zum Entölen von Schrotten aus Aluminium-Werkstoffen zur Verfügung zu stellen, mit welchem der energetische Aufwand und der Zeitaufwand für die Entölung der Schrotte erheblich reduziert wird.

Erfindungsgemäß ist die zuvor hergeleitete und aufgezeigte Aufgabe dadurch gelöst, daß dem Entölungsmittel Tenside oder organische Lösungsmittel zugesetzt werden. Über den Zusatz von Tensiden oder organischen Lösungsmitteln zu dem Entölungsmittel wird das Abspülen der Ölrückstände auch bei niedrigeren Temperaturen als bei der üblichen Heißwasserbehandlung erheblich beschleunigt, wodurch der Energie- als auch der Zeitaufwand deutlich reduziert werden.

Werden gemäß einer weiteren Ausgestaltung dem Entölungsmittel zusätzlich Beizmittel zugesetzt, so verbessert sich einerseits der Entölungsgrad und reduziert sich andererseits die notwendige Verweildauer des Entölungsmittels auf der Oberfläche der Schrotte. Die Zugabe von Beizmitteln führt zur Oberflächenabtragung von Aluminium und damit zu einer verbesserten Ablösung der auf der Oberfläche haftenden Ölrückstände.

Dadurch, daß dem Entölungsmittel als Beizmittel Basen zugesetzt werden, wird gewährleistet, daß die gebeizten Oberflächen hydrophoben Charakter haben, was zu verbesserten Ergebnissen bei der Trocknung im Hinblick auf Trocknungszeit und Energieeinsatz führt.

Beispielsweise der Zusatz von Natriumkarbonat zu dem Entölungsmittel führt zu einer deutlichen Verbesserung der Entölung im Hinblick auf das Entölungsergebnis, die Entölungsgeschwindigkeit und den notwendigen Energieeinsatz zur Entölung.

Eine besonders vorteilhafte Ausgestaltung erfährt das erfindungsgemäße Verfahren dadurch, daß als Entölungsmittel das Abwasser einer Entfettungsbehandlung von Aluminium-Halbzeugen verwendet wird. Aluminium-Halbzeuge, insbesondere Aluminium-Walzprodukte, werden regelmäßig in einem der notwendigen Veredelungsprozesse einer Entfettung unterzogen, um eine an die Weiterverarbeitung angepaßte Oberflächenqualität zu gewährleisten. Bei dieser Entfettung werden überwiegend Walzöle von der Halbzeugoberfläche entfernt. Die Entfettungsbehandlung wird häufig mit einer Beizbehandlung kombiniert. Da an die Oberflächenqualität der Aluminium-Halbzeuge in der Regel hohe Anforderungen gestellt werden, können die zur Entfettung eingesetzten Entfettungsmittel nur begrenzt wiederverwendet werden. Es hat sich gezeigt, daß auch die nicht weiter zur Entfettung von Aluminium-Halbzeugen geeigneten Entfettungsmittel ohne weiteres als erfindungsgemäße Entölungsmittel zur Beseitigung von Ölrückständen an der Oberfläche von Aluminium-Schrotten verwendet werden können. Dies ist aus verschiedenen Gründen vorteilhaft. Zum einen existiert zwischen den Produktionsstandorten für Aluminium-Halbzeuge und den Produktionsstandorten, an denen Aluminium-Schrotte einem Schmelzprozeß zugeführt werden können, in aller Regel eine Logistik-Anbindung. Zum anderen sind die Abwasser einer Entfettungsbehandlung von Aluminium-Halbzeugen bereits vorgewärmt, so daß sie sich ohne weitere oder aber nur mit geringer weiterer Vorwärmung zum Entölen von Schrotten einsetzen lassen, wodurch der Energieeinsatz weiter reduziert wird. Zum anderen wird die Verwendbarkeit der Entfettungsmittel durch den nachfolgenden Einsatz zum Entölen weiter erhöht, was die Umweltverträglichkeit verbessert. Schließlich wird auch die Aufbereitung der Entfettungsmittel nach dem Entfetten von Halbzeugen und dem Entölen von Schrotten durch die stärkere Ölbelastung verbessert.

Bei dem erfindungsgemäßen Einsatz von chemischen Zusätzen zu dem Entölungsmittel ist es zum Abwaschen dieser Zusätze notwendig, daß die Schrotte nach der Behandlung mit dem Entölungsmittel mit Wasser gespült werden.

Um die Schrotte zur Trocknung auf eine höhere Temperatur zu bringen, ist es vorteilhaft, die Schrotte nach dem Spülen mit Wasser über das Zuführen von Wasserdampf oder Heißluft zu erhitzen.

Im Hinblick auf eine Verbesserung der wiederholten Benetzung der Schrotte mit dem Entölungsmittel ist es vorteilhaft, wenn die Schrotte während der Behandlung bewegt werden.

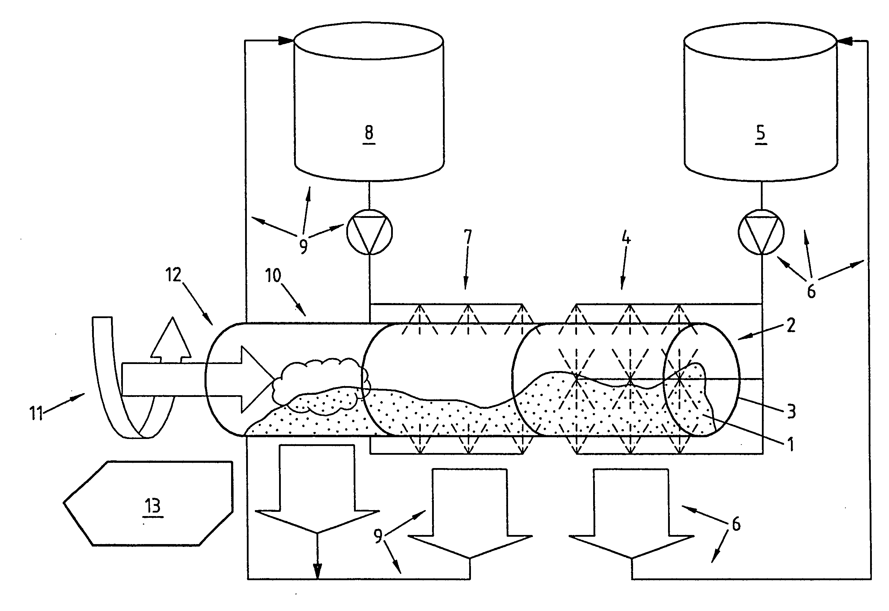

Es gibt nun eine Vielzahl von Möglichkeiten, das erfindungsgemäße Verfahren zum Entölen von Schrotten aus Aluminium-Werkstoffen auszugestalten und weiterzubilden. Hierzu wird beispielsweise verwiesen einerseits auf die dem Patentanspruch 1 nachgeordneten Patentansprüche, andererseits auf die Beschreibung eines Ausführungsbeispiels eines erfindungsgemäßen Verfahrens in Verbindung mit der Zeichnung.

In der Zeichnung zeigt die einzige Figur ein Ausführungsbeispiel einer Vorrichtung zur Verwirklichung des erfindungsgemäßen Verfahrens zum Entölen von Schrotten aus Aluminium-Werkstoffen.

Bei dem in der einzigen Figur dargestellten Ausführungsbeispiel für eine Vorrichtung zum Entölen von Schrotten aus Aluminium-Werkstoffen, mit der das erfindungsgemäße Verfahren verwirklicht wird, werden die Schrotte 1 von einer Eintrags-Seite 2 in eine drehbare, durchlässige Transporttrommel 3 gegeben. Diese Transporttrommel 3 ist dabei gegenüber der Horizontalen, in der Zeichnung nach links abfallend, geneigt, um einen Transport der Schrotte 1 zu gewährleisten.

Die Schrotte 1 werden vor dem Eintragen in die Transporttrommel 3, sofern notwendig, durch Schreddern zerkleinert, und auf ein möglichst einheitliches Maß gebracht, so daß ein gleichmäßiger Transport und eine gute Benetzung der Oberfläche der Schrotte 1 gewährleistet ist.

Bei dem dargestellten Ausführungsbeispiel durchlaufen die Schrotte 1 zunächst eine Entölungszone 4, innerhalb derer die Schrotte 1 mit einem Entölungsmittel 5 besprüht werden, welches als Abwasser einem Entfettungsprozeß bei der Herstellung von Aluminium-Halbzeugen entnommen wird. Dieses Entölungsmittel 5 enthält bei dem dargestellten Ausführungsbeispiel sowohl Tenside als auch Natriumkarbonat. Das unterhalb der Entölungszone 4 aufgefangene Entölungsmittel 5 wird mit eventuell zwischengeschalteter Aufbereitungsstufe dem Entölungskreislauf 6 erneut zugeführt. In der Entölungszone 4 wird bei dem dargestellten Ausführungsbeispiel einer Vorrichtung zum Entölen von Schrotten die Ölbelegung auf der Oberfläche der Schrotte entfernt und darüber hinaus die Oberfläche gebeizt, so daß sie hydrophobe Eigenschaften aufweist.

Aus der Entölungszone 4 werden die Schrotte 1 über die Drehung der Transporttrommel 3 in eine Spülzone 7 transportiert, in der die Schrotte 1 über das Besprühen mit Rohwasser 8 von dem Entölungsmittel 5 befreit. Das Rohwasser 8 wird dabei unterhalb der Spülzone 7 aufgefangen und einem Rohwasserkreislauf 9 mit eventuell zwischengeschalteter Rohwasseraufbereitung zugeführt.

In einer Heizzone 10 werden die Schrotte 1 über das Einblasen von Wasserdampf über ein Gebläse 11 erhitzt und schließlich an einer Austrag-Seite 12 aus der Transporttrommel 3 in einen schematisch dargestellten Container 13 gefüllt, in dem die Resttrocknung über die erhöhte Temperatur erfolgt.

Neben der bei dem dargestellten Ausführungsbeispiel einer Vorrichtung zum Entölen von Schrotten verwirklichten gleichzeitigen, in verschiedenen Zonen erfolgenden Behandlung ist es gleichfalls denkbar, die Schrotte an einem Ort nacheinander einer Entölung, einem Spülen und einem anschließenden Heizen auszusetzen.

Der Umfang und die Notwendigkeit des Heizens sowohl bei der dargestellten Vorrichtung als auch der beschriebenen alternativen Ausgestaltung einer entsprechenden Vorrichtung ergibt sich aus der Vorwärmung des Rohwassers zum Spülen. Bei entsprechender Temperatur dieses Rohwassers kann ein separates Aufheizen der Schrotte aufgrund der hydrophoben Eigenschaften der gebeizten Oberflächen der Schrotte unter Umständen vollständig entfallen.

## Patentansprüche

1. Verfahren zum Entölen von Schrotten aus Aluminiumwerkstoffen, bei welchem auf der Oberfläche der Schrotte anhaftende Ölrückstände über ein wässriges Entölungsmittel abgespült werden,
**dadurch gekennzeichnet, daß** dem Entölungsmittel Tenside oder organische Lösungsmittel zugesetzt werden.

2. Verfahren nach Anspruch 1,
**dadurch gekennzeichnet, daß** dem Entölungsmittel Beizmittel zugesetzt werden.

3. Verfahren nach Anspruch 2,
**dadurch gekennzeichnet, daß** dem Entölungsmittel Basen zugesetzt werden.

4. Verfahren nach Anspruch 2
**dadurch gekennzeichnet, daß** dem Entölungsmittel Natriumkarbonat zugesetzt wird.

5. Verfahren nach einem der Ansprüche 1 bis 4,
**dadurch gekennzeichnet, daß** als Entölungsmittel das Abwasser einer Entfettungsbehandlung von Aluminium-Halbzeugen verwendet wird.

6. Verfahren nach einem der Ansprüche 1 bis 5,
**dadurch gekennzeichnet, daß** die Schrotte nach der Behandlung mit dem Entölungsmittel mit Wasser gespült werden.

7. Verfahren nach Anspruch 6,
**dadurch gekennzeichnet, daß** die Schrotte nach dem Spülen mit Wasser über das Zuführen von Wasserdampf oder Heißluft erhitzt werden.

8. Verfahren nach einem der Ansprüche 1 bis 7,
**dadurch gekennzeichnet, daß** die Schrotte während der Behandlung bewegt werden.
